(19) Europäisches Patentamt

European Patent Office

Office européen des brevets

(11) **EP 1 347 906 B1**

(12) **EUROPÄISCHE PATENTSCHRIFT**

(45) Veröffentlichungstag und Bekanntmachung des Hinweises auf die Patenterteilung:
**27.01.2010 Patentblatt 2010/04**

(21) Anmeldenummer: **01995552.5**

(22) Anmeldetag: **30.11.2001**

(51) Int Cl.:
**B60T 8/00** (2006.01)

(86) Internationale Anmeldenummer:
**PCT/DE2001/004503**

(87) Internationale Veröffentlichungsnummer:
**WO 2002/053424 (11.07.2002 Gazette 2002/28)**

(54) **BREMSREGELSYSTEM ZUR STABILISIERUNG DER BEWEGUNG EINES NUTZFAHRZEUGS**

BRAKE REGULATING SYSTEM FOR STABILISING THE MOVEMENT OF A COMMERCIAL VEHICLE

SYSTEME DE REGULATION DE FREINAGE DESTINE A STABILISER LE DEPLACEMENT D'UN VEHICULE UTILITAIRE

(84) Benannte Vertragsstaaten:
**DE FR IT SE**

(30) Priorität: **29.12.2000 DE 10065724**

(43) Veröffentlichungstag der Anmeldung:
**01.10.2003 Patentblatt 2003/40**

(73) Patentinhaber: **KNORR-BREMSE Systeme für Nutzfahrzeuge GmbH 80809 München (DE)**

(72) Erfinder:
• **LEIMBACH, Klaus-Dieter 73569 Eschach (DE)**
• **HECKER, Falk 71706 Markgroeningen (DE)**
• **JUNDT, Oliver 74354 Besigheim (DE)**
• **SCHRAMM, Herbert 71229 Leonberg (DE)**

(74) Vertreter: **Schönmann, Kurt Knorr-Bremse AG, Patentabteilung, Moosacher Strasse 80 80809 München (DE)**

(56) Entgegenhaltungen:
**EP-A- 0 943 514      EP-A- 1 046 571
DE-A- 4 218 034       DE-A- 19 859 966
DE-C- 19 829 582**

**Beschreibung**

Die Erfindung bezieht sich auf ein Bremsregelsystem zur Stabilisierung der Bewegung einer Zugfährzeug-Anhänger-Kombination gemäß Patentanspruch 1

Im Rahmen der Fahrdynamikregelung eines Kraftfahrzeugs kann zur Stabilisierung der Fahrzeugbewegung ein dynamisches Bremsregelsystem zum Einsatz kommen, bei dem über die individuelle Vorgabe eines Bremsdrucks für jedes einzelne Rad ein gezielter und selektiver Bremseingriff auf jedes Rad vorgenommen werden kann.

Ein derartiges Bremsregelsystem für einen Personenkraftwagen, wie es aus der DE 39 19 347 A1 bekannt ist, umfasst eine zentrale Steuereinheit, die im Bedarfsfall, also beispielsweise bei beginnender oder bereits eingetretener Instabilität des Fahrzustandes, aus einer Anzahl von für die jeweilige Fahrsituation spezifischen Eingangsgrößen für jedes Rad einen individuellen Bremsdruck ermittelt.

Die Steuereinheit übermittelt anschließend einen Stellwert für den Bremsdruck des jeweiligen Rads an einen dem Rad zugeordneten Modulator, der seinerseits auf das üblicherweise hydraulische Bremssystem einwirkt und so den für eine Stabilisierung der Fahrsituation erforderlichen Bremsdruck an dem jeweiligen Rad einstellt. Zusätzlich oder alternativ zur Bereitstellung der Stellwerte für die Bremsdrücke der Räder kann die Steuereinheit zudem auch einen Stellwert für die Drosselung einer Ausgangsgröße des Fahrzeugantriebs, beispielsweise des Motormoments, ermitteln, so dass über eine gezielte Drosselung der Fahrleistung eine Stabilisierung der Fahrsituation bewirkt oder zumindest unterstützt werden kann.

Als Eingangsgrößen werden der Steuereinheit des aus der DE 39 19 347 A1 bekannten Bremsregelsystems Messdaten über die Radgeschwindigkeiten, über die Gierrate des Fahrzeugs und, über den den Fahrerwunsch repräsentierenden Lenkradwinkel zugeführt. Aus diesen Daten wird dann in der Steuereinheit ein gemessener Giergrad des Fahrzeugs, entsprechend einem Ist-Zustand, ermittelt und mit einem aus dem Lenkradwinkel ermittelten gewünschten Giergrad, entsprechend einem Soll-Zustand, verglichen. Im Bedarfsfall, also bei Abweichung zwischen Ist- und Soll-Zustand, werden aus dem Grad der Abweichung Stellwerte für individuelle Bremsdrücke der Räder ermittelt und an die den Rädern jeweils zugeordneten Modulatoren ausgegeben.

Bei der Fahrdynamikregelung von Nutzfahrzeugen ist im Vergleich zu einem PKW eine höhere Anzahl von Bewegungsfreiheitsgraden zu berücksichtigen. So können beispielsweise aufgrund des vergleichsweise höheren Schwerpunkts Kipp- oder Wankbewegungen des Fahrzeugaufbaus auftreten. Das aus der DE 39 19 347 A1 bekannte Bremsregelsystem ist daher für eine zuverlässige Stabilisierung der Fahrzeugbewegung bei einem Einsatz in einem Nutzfahrzeug nur bedingt geeignet.

In der Europäischen Patentschrift 1046571 ist ein Verfahren zur Reduktion der Kippgefahr von Kraftfahrzeugen beschrieben. Dabei wird ein Kippkoeffizient des Kraftfahrzeugs durch eine Messung der Reifenaufstandskräfte ermittelt und mit einem vorgegebenen Grenzwert verglichen, bei dessen Überschreitung automatisch ein Lenkeingriff eingeleitet wird, der mit abnehmender Kippstabilität zunimmt und mit zunehmender Kippstabilität reduziert oder zumindest konstant gehalten wird.

Die gattungsgemäße DE 42 18 034 A1 beschreibt ein Bremsregelsystem eines Fahrzeugs, bei welchem die Giergeschwindigkeit des Fahrzeugs auf der Basis der an zwei Stellen im Fahrzeug gemessenen Querbeschleunigungen ermittelt wird, wobei die Beschleunigungssensoren in Längsrichtung des Fahrzeugs gesehen versetzt angeordnet sind.

Der Erfindung liegt die Aufgabe zugrunde, ein Bremsregelsystem der oben genannten Art anzugeben, das auch für einen Einsatz in einer Zugfahrzeug-Anhänger-Kombination besonders geeignet ist.

Diese Aufgabe wird mit einem die Merkmale von Patentanspruch 1 umfassenden Bremsregelsystem gelöst.

Die Erfindung geht dabei von der Überlegung aus, dass auch bei einem Einsatz in einer Zugfahrzeug-Anhänger-Kombination zusätzlich zu den aktuellen Radgeschwindigkeitswerten der Steuereinheit des Bremsregelsystems den Lenkwinkel (und somit den Fahrerwunsch) charakterisierende Messwerte und die Drehrate oder Gierrate des Zugfahrzeugs bzw. des Anhängers charakterisierende Messwerte als Eingangsgrößen zugeführt sein sollten. Um darüber hinaus aber auch der vergleichsweise höheren Komplexität des Fahrverhaltens einer Zugfahrzeug-Anhänger-Kombination Rechnung zu tragen, sollte bei der Bremsregelung auch der sogenannte Schwimmwinkel berücksichtigt sein, der stets unterhalb eines für das Ausbrechen des Nutzfahrzeugs charakteristischen Grenzwertes gehalten werden sollte.

Der Schwimmwinkel ist eine aus der Dreh- oder Gierrate einerseits und aus der im Schwerpunkt wirkenden Querbeschleunigung andererseits ableitbare Größe. Das auf eine besonders zuverlässige Nutzbarkeit für Zugfahrzeug-Anhänger-Kombinationen ausgebildete Bremsregelsystem ist somit auch für eine Zuführung von für die Querbeschleunigung charakteristischen Messwerten zur Steuereinheit ausgelegt.

Dazu umfasst das Sensorsystem zur Ermittlung der Gierrate des Zugfahrzeugs einen zweiten Beschleunigungssensor zur Erfassung der Querbeschleunigung des Zugfahrzeugs, wobei der zweite Beschleunigungssensor, in Längsrichtung des Zugfahrzeugs gesehen, versetzt zum ersten Beschleunigungssensor angeordnet ist. Bei dieser Anordnung, die eine Einsparung des Gierratensensors und somit eine besonders kostengünstige Ausführung des Bremsregelsystems ermöglicht, ermittelt die Steuereinheit anhand der ihr zugeführten Messwerte $a_{y1}$ (= die vom ersten Beschleunigungssensor gemessene Querbeschleunigung) und $a_{y2}$ (= die vom zweiten Beschleunigungssensor gemessene Querbeschleunigung) die Drehrate des Zugfahrzeugs nach der Beziehung:

$$\omega_z = \int(a_{y1} - a_{y2}) / (x_1 - x_2)dt$$

Dabei sind $x_1$, $x_2$ die Position des ersten bzw. zweiten Beschleunigungssensors, bezogen auf den Schwerpunkt des Zugfahrzeugs, jeweils gemessen in Längsrichtung des Zugfahrzeugs. $x_1$ und $x_2$ nehmen in Vorwärtsrichtung positive und in Rückwärtsrichtung negative Werte an.

Die Steuereinheit des Bremsregelsystems ermittelt in dieser Anordnung die im Schwerpunkt des Zugfahrzeugs wirkende Querbeschleunigung $a_y$ nach der Beziehung

$$a_y = (a_{y1}{}^*x_1 - a_{y2}{}^*x_2)/(x_1-x_2)$$

Bei der Ausstattung eines Sattelkraftfahrzeugs, gebildet aus dem als Sattelzugmaschine vorgesehen Nutzfahrzeug und einem mit diesem verbunden Sattelanhänger, mit einem Bremsregelsystem ist in besonderer Weise zu beachten, dass der Sattelzug im Vergleich zum alleinlaufenden Nutzfahrzeug über einen weiteren Freiheitsgrad, nämlich über den durch die Längsachsen von Sattelzugmaschine und Sattelanhänger gebildeten Knickwinkel, verfügt. Bei der Stabilitätsregelung ist dabei zu beachten, dass auch ein mögliches Einknicken des Sattelanhängers im Verhältnis zur Sattelzugmaschine zu einer Destabilisierung führen kann.

Um diesen Freiheitsgrad in die Stabilitätsregelung einzubeziehen, ist die Steuereinheit eingangsseitig mit einem zweiten Sensorsystem zur Ermittlung der Gierrate des mit der Sattelzugmaschine verbundenen Sattelanhängers verbunden.

Das zweite Sensorsystem kann dabei insbesondere als Gierratensensor nach dem Coriolisprinzip ausgebildet sein. Bei dieser Anordnung ermittelt die Steuereinheit den Knickwinkel aus den ihr als Eingangsgrößen zugeführten Werten für die Drehrate des Anhängers $\omega_{za}$ und die Drehrate $\omega_z$ des Zugfahrzeugs nach der Beziehung:

$$\Psi=\int(\omega_z-\omega_{za})dt$$

Dieses Konzept ist auch auf Lastkraftwagenzüge oder Sattelzüge, d. h. die Hintereinanderkopplung mehrerer Anhänger hinter das Nutzfahrzeug als Motorwagen, erweiterbar, wobei jeder Anhänger jeweils mit einem Sensorsystem zur Ermittlung seiner Gi$_2$rrate ausgerüstet ist, und wobei die Steuereinheit aus den gemessenen Gierraten die Knickwinkel zwischen jeweils zwei hintereinander laufenden Fahrzeugen des Lastkraftwagenzuges ermittelt.

Von besonderer Bedeutung bei der Stabilitätsregelung eines Nutzfahrzeugs ist, infolge des im Vergleich zu einem PKW erhöhten Schwerpunkts, die Berücksichtigung der Kippneigung. Dies erfolgt vorliegend vorzugsweise durch die Berücksichtigung der Fahrzeugneigung, die anhand des durch eine Fahrzeugachse und eine durch den Fahrzeugaufbau vorgegebene Referenzrichtung gebildeten Wankwinkels erfaßt wird. Dazu ist die Steuereinheit, eingangsseitig vorteilhafterweise mit einem Wankwinkelsensor zur Erfassung des Wankwinkels des Nutzfahrzeugs verbunden.

In alternativer vorteilhafter Ausgestaltung ist die Steuereinheit eingangsseitig mit einem Wankgeschwindigkeitssensor zur Erfassung der Winkelgeschwindigkeit zwischen dem Fahrzeugaufbau und einer Fahrzeugachse verbunden. Der Wankwinkel ist dabei in der Steuereinheit durch Zeitintegration der gemessenen Winkelgeschwindigkeit ableitbar.

Die mit der Erfindung erzielten Vorteile bestehen insbesondere darin, daß durch Berücksichtigung von Eingangsgrößen für die Steuereinheit, aus denen die im Schwerpunkt des Nutzfahrzeugs wirkende Querbeschleunigung ableitbar ist, das Bremsregelsystem auch für die vergleichsweise komplexe Stabilitätsregelung eines Nutzfahrzeugs besonders zuverlässig einsetzbar ist. Durch die genannten Anordnungen weiterer Sensoren und die dadurch ermöglichte Zuführung weiterer besonders geeigne-ter Eingangsparameter an die Steuereinheit ist das Bremsregelsystem zudem in einfacher Weise an die für Nutzfahrzeuge spezifischen Anforderungen anpaßbar.

Ein Ausführungsbeispiel wird anhand einer Zeichnung näher erläutert. Darin zeigen:

Figur 1     schematisch ein Bremsregelsystem zur Stabilisierung der Bewegung eines Nutzfahrzeugs, '

Figur 2    eine alternative Ausführungsform des Bremsregelsystems nach Figur 1,

Figur 3    schematisch ein Bremsregelsystem zur Stabilisierung der Bewegung eines aus einem Nutzfahrzeug und einem angekoppelten Anhänger gebildeten Sattelfahrzeugs, und

Figur 4    eine alternative Ausführungsform des Bremsregelsystems nach Figur 3, die die Erfindung zeigt.

Gleiche Teile sind in allen Figuren mit denselben Bezugszeichen versehen .

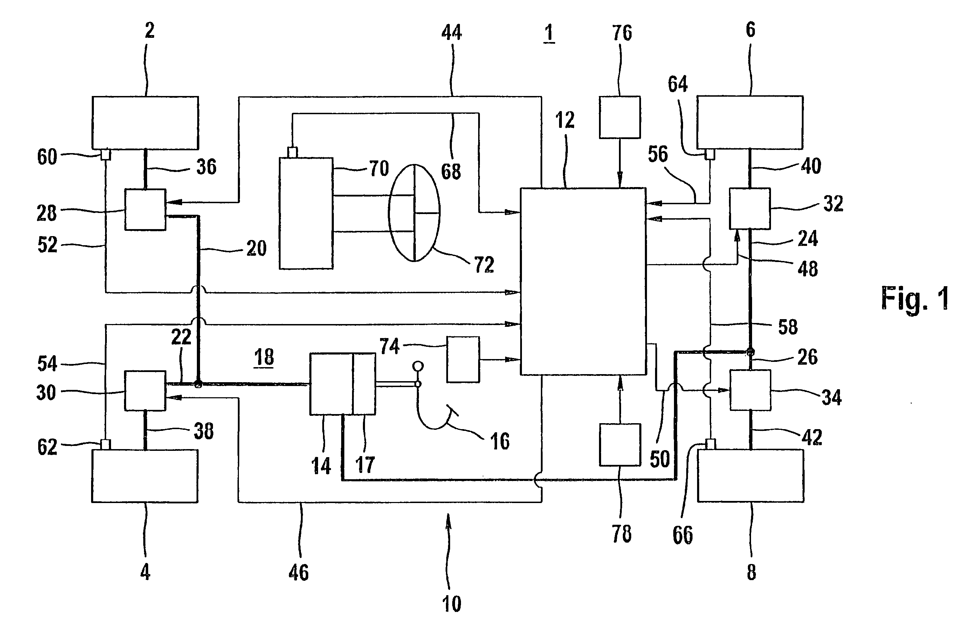

Das Bremsregelsystem 1 gemäß Figur 1 ist zur Stabilitätsregelung eines durch seine Räder 2, 4, 6, 8 angedeuteten Nutzfahrzeugs 10 vorgesehen. Das Bremsregelsystem 1 umfaßt eine Steuereinheit 12, die im Bedarfsfall, also beispielsweise bei beginnender oder bereits eingetretener Instabilität des Fahrzustandes, aus einer Anzahl von für die jeweilige Fahrsituation spezifischen Eingangsgrößen für jedes Rad 2, 4, 6, 8 einen individuellen Bremsdruck ermittelt.

Das Nutzfahrzeug 10 ist mit einer pneumatisches Bremsanlage ausgerüstet, die einen Druckluftbehälter 14 umfaßt. Diesem ist ein vom Fahrer des Nutzfahrzeugs 10 über ein Bremspedal 16 betätigbares Betriebsbremsventil 17 zugeordnet. In Abhängigkeit von einem vom Fahrer über das Bremspedal 16 ausgeübten Bremseingriff beaufschlagt der Druckluftbehälter 14 ein pneumatisches Bremsleitungssystem 18 mit Bremsdruck. Das Bremsleitungssystem 18 umfaßt eine Anzahl von Bremsleitungen 20, 22, 24, 26, von denen jede jeweils einem Rad 2, 4, 6 bzw. 8 zugeordnet ist. Jede Bremsleitung 20, 22, 24, 26 verbindet den Druckluftbehälter 14 jeweils mit einem der Räder 2, 4, 6, 8 vorgeschalteten Druckregelmodul 28, 30, 32 bzw. 34, das jeweils in Abhängigkeit von der Pedalstellung des Bremspedals 16 einen Bremsdruck am ihm zugeordneten Rad 2, 4, 6 bzw. 8 einstellt. Für einen Notfall, also bei Ausfall der Steuerelektronik, verbindet auch bei geöffnetem Betriebsbremsventil 17 jede Bremsleitung 20, 22, 24, 26 den Druckluftbehälter 14 derart mit dem jeweiligen Druckregelmodul 28, 30, 32 bzw. 34, daß eine Bremsung aller Räder 2, 4, 6, 8, erfolgen kann. Die Bremsregelmodule 28, 30, 32, 34 sind zudem auch direkt, also unter Umgehung des Betriebsbremsventils 17, pneumatisch mit dem Druckluftbehälter 14 verbunden und stellen so auch ohne Bremseingriff des Fahrers den für eine Stabilisierung der Fahrsituation erforderlichen Bremsdruck an jedem Rad 2, 4, 6, 8 ein. Dazu setzen sie den durch den Druckluftbehälter 14 vorgegebenen Bremsdruck in Abhängigkeit von zugeführten Stellwerten in individuell für jedes Rad 2, 4, 6, 8 vorgegebene Bremsdrücke um, mit denen jeweils nachgeschaltete, mit dem Bremssystem des jeweiligen Rads 2, 4, 6 bzw. 8 verbundene Leitungen 36, 38, 40, 42 beaufschlagt werden.

Der Stellwert für den Bremsdruck des jeweiligen Rads 2, 4, 6, 8 wird von der Steuereinheit 12 vorgegeben. Diese ist dazu ausgangsseitig über Signalleitungen 44, 46, 48, 50 an die den Rädern 2, 4, 6, 8 zugeordneten Druckregelmodule 28, 30, 32, 34 angeschlossen. Zusätzlich oder alternativ zur Bereitstellung der Stellwerte für die Bremsdrücke der Räder 2, 4, 6, 8 kann die Steuereinheit 12 zudem auch einen Stellwert für die Drosselung einer Ausgangsgröße des Fahrzeugantriebs, beispielsweise des Motormoments, ermitteln, so daß über eine gezielte Drosselung der Fahrleistung eine Stabilisierung der Fahrsituation bewirkt oder zumindest unterstützt werden kann.

Eingangsseitig ist die Steuereinheit 12 über Signalleitungen 52, 54, 56, 58 an den Rädern 2, 4, 6, 8 jeweils zugeordnete Geschwindigkeitssensoren 60, 62, 64, 66 angeschlossen. Diese ermitteln Meßwerte für die aktuelle Geschwindigkeit jedes Rads 2, 4, 6, 8, die sodann über die Signalleitungen 52, 54, 56, 58 der Steuereinheit 12 als Eingangsgrößen zugeführt werden. Weiterhin ist die Steuereinheit 12 eingangsseitig über eine Signalleitung 68 mit einem Lenkwinkelsensor 70 zur Erfassung eines Lenkwinkels verbunden. Der Lenkwinkelsensor 70 ermittelt dabei einen Meßwert, der den vom Fahrer vorgegebenen Einschlag des Lenkrads 72 und somit den Fahrerwunsch charakterisiert und über die Signalleitung 68 der Steuereinheit als weitere Eingangsgröße zuführbar ist.

Zusätzlich ist die Steuereinheit 12 eingangsseitig mit einem nach dem Coriolisprinzip ausgelegtem Drehratensensor 74 ausgebildeten Sensorsystem zur Ermittlung der Drehrate oder Gierrate des Nutzfahrzeugs 10, mit einem ersten Beschleunigungssensor 76 zur Erfassung der Querbeschleunigung des Nutzfahrzeugs 10, und mit einem Wankwinkelsensor 78 zur Erfassung des Wankwinkels des Nutzfahrzeugs 10 verbunden. Mit anderen Worten: der Steuereinheit 12 sind als weitere Eingangsgrößen die Drehrate oder Gierrate, die Querbeschleunigung und der Wankwinkel des Nutzfahrzeugs 10 zuführbar. Diese Eingangsgrößen werden somit zusammen mit den üblicherweise herangezogenen Eingangsgrößen, wie beispielsweise den Radgeschwindigkeiten, bei der Ermittlung der Stellwerte für die Bremsdrücke an den Rädern 2, 4, 6, 8 mit berücksichtigt, so daß das Bremsregelsystem 1 auch bei der erhöhten Komplexität der Bewegungsvorgänge bei Anwendung im Nutzfahrzeug 10 besonders zuverlässig arbeitet.

Bei der Bildung der Stellwerte für die Bremsdrücke berücksichtigt die Steuereinheit 12 insbesondere auch die im Schwerpunkt des Nutzfahrzeugs 10 wirkende Querbeschleunigung $a_y$. Diese ermittelt die Steuereinheit 12 aus den ihr zugeführten Meßwerten $a_{y1}$ (= die im Beschleunigungssensor 76 gemessene Querbeschleunigung) und $\omega_z$ (=die im Drehratensensor 74 gemessene Drehrate) nach der Beziehung:

$$a_y = a_{y1} - \dot{\omega}_z \bullet x_1$$

Dabei sind $\omega_z^\bullet$ die aus der gemessenen Drehrate $\omega_z$ abgeleitete Drehbeschleunigung und $l_1$ der Abstand zwischen Beschleunigungssensor 76 und Schwerpunkt des Nutzfahrzeugs, gemessen in Längsrichtung des Nutzfahrzeugs.

Die so ermittelte Querbeschleunigung im Schwerpunkt des Nutzfahrzeugs 10 wird gemeinsam mit der Drehrate bei der Bestimmung des Schwimmwinkels herangezogen. Dabei stellt die Steuereinheit 12 sicher, daß ein vorgegebener Grenzwert für den Schwimmwinkel nicht überschritten wird und somit ein Ausbrechen des Nutzfahrzeugs 10 nicht auftritt.

Gleichermaßen wird der vom Wankwinkelsensor 78 erfaßte Wankwinkel überwacht, so daß ein drohendes Kippen des Nutzfahrzeugs 10 rechtzeitig erkannt wird und Gegenmaßnahmen eingeleitet werden können. Alternativ kann dabei anstelle des Wankwinkelsensors 78 auch ein Wankgeschwindigkeitssensor zur Erfassung der Winkelgeschwindigkeit zwischen dem Fahrzeugaufbau und einer Fahrzeugachse vorgesehen sein. Der Wankwinkel ist dabei in der Steuereinheit 12 durch Zeitintegration der gemessenen Winkelgeschwindigkeit ableitbar.

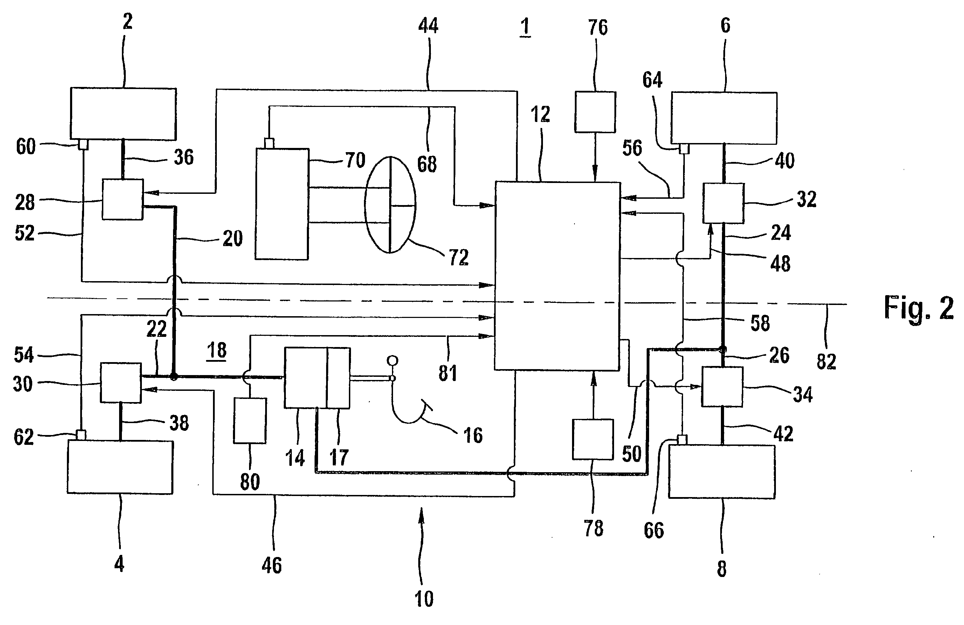

Im Ausführungsbeispiel gemäß Figur 2 ist anstelle des Drehratensensors 74 ein zweiter Beschleunigungssensor 80 zur Erfassung der Querbeschleunigung des Nutzfahrzeugs 10 vorgesehen, mit dem die Steuereinheit 12 eingangsseitig über eine Signalleitung 81 verbunden ist. Der zweite Beschleunigungssensor 80 ist, in Längsrichtung 82 des Nutzfahrzeugs 10 gesehen, versetzt zum ersten Beschleunigungssensor 76 angeordnet. In diesem Ausführungsbeispiel bildet der erste Beschleunigungssensor 76 gemeinsam mit dem zweiten Beschleunigungssensor 80 das Sensorsystem zur Ermittlung der Gierrate des Nutzfahrzeugs 10.

Bei dieser Anordnung, die eine Einsparung des Drehratensensors 74 ermöglicht, ermittelt die Steuereinheit 12 anhand der ihr zugeführten Meßwerte $a_{y1}$ (= die vom ersten Beschleunigungssensor 76 gemessene Querbeschleunigung) und $a_{y2}$ (= die vom zweiten Beschleunigungssensor 80 gemessene Querbeschleunigung) die Drehrate $\omega_z$ des Nutzfahrzeugs 10 nach der Beziehung:

$$\omega_z = \int (a_{y1} - a_{y2}) \, / \, (x_1 - x_2) \, dt$$

Dabei sind $x_1$, $x_2$ der Abstand zwischen erstem bzw. zweitem Beschleunigungssensor 76, 80 und Schwerpunkt des Nutzfahrzeugs, jeweils gemessen in.Längsrichtung 82 des Nutzfahrzeugs.

Die Steuereinheit 12 des Bremsregelsystems 1 ermittelt dabei die im Schwerpunkt des Nutzfahrzeugs 10 wirkende Querbeschleunigung $a_y$ nach der Beziehung:

$$a_y = (a_{y1} \bullet x_1 - a_{y2} \bullet x_2) / (x_1 - x_2)$$

Somit stehen in dieser Ausführungsform die gleichen Zwischenwerte zur Weiterverarbeitung zur Verfügung wie im vorangegangenen Ausführungsbeispiel.

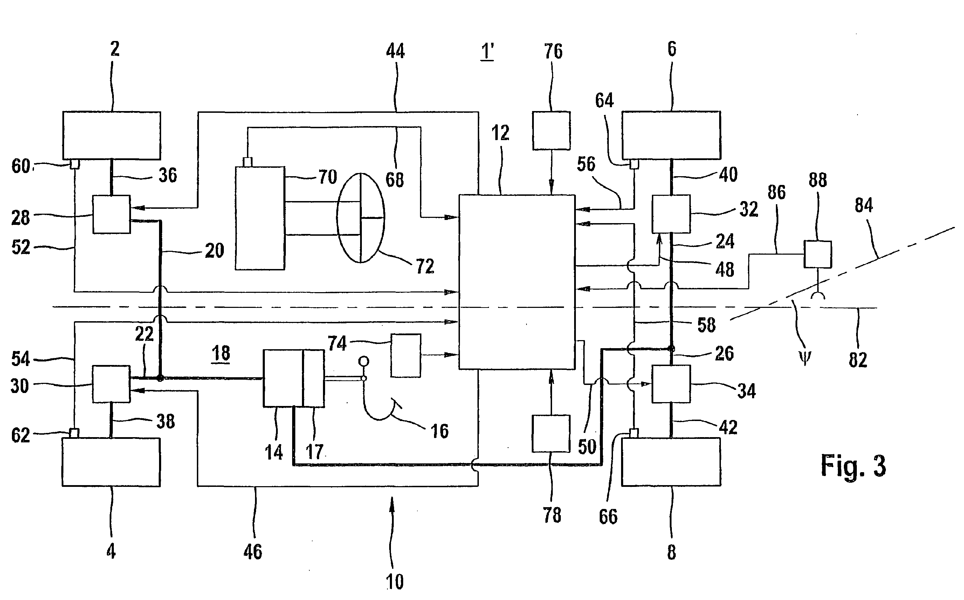

Das Bremsregelsystem 1 gemäß Figur 3 ist für den Einsatz in einem aus einem als Sattelzugmaschine vorgesehenen Nutzfahrzeug 10 und einem lediglich durch seine Längsachse 84 dargestellten angekoppelten Sattelanhänger gebildeten Sattel kraftfahrzeug ausgebildet. Für die Stabilitätsregelung eines derartigen Sattelkraftfahrzeugs oder Sattelzuges kann auch der durch die Längsrichtung 82 des Nutzfahrzeugs 10 und die Längsachse 84 des Sattelanhängers gebildete Knickwinkel $\psi$ von Bedeutung sein. Insbesondere kann ein mögliches Einknicken des Sattelanhängers im Verhältnis zum Nutzfahrzeug 10 zu einer Destabilisierung führen. Um diesen Freiheitsgrad in die Stabilitätsregelung einzubeziehen, ist die Steuereinheit 12 des Bremsregelsystems 1 eingangsseitig über eine Signalleitung 86 mit einem Knickwinkelsensor 88 zur Erfassung des Knickwinkels $\psi$ verbunden.

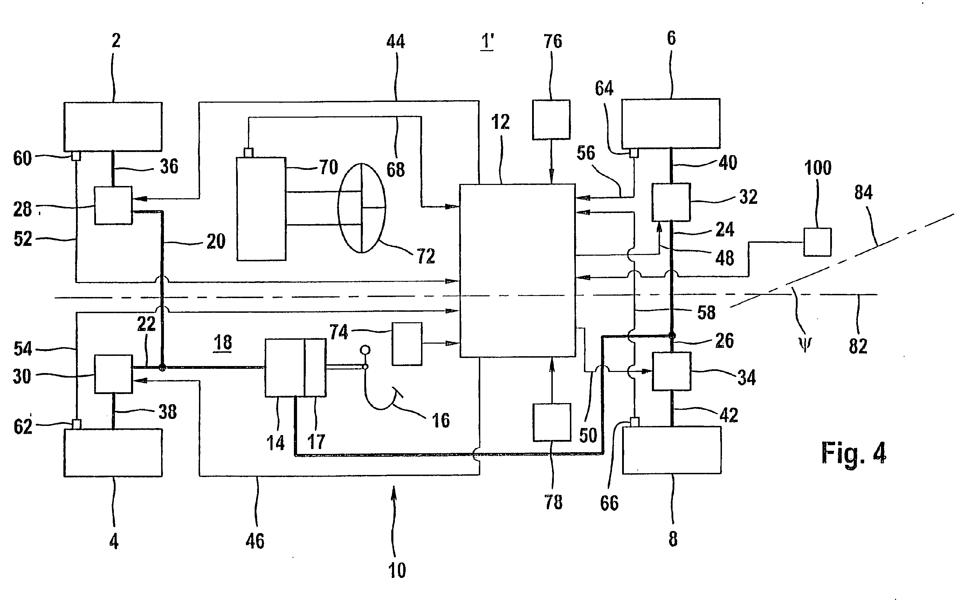

Im Ausführungsbeispiel gemäß Figur 4 ist die Steuereinheit 12 des Bremsregelsystems 1 eingangsseitig mit einem zweiten, nach dem Coriolisprinzip ausgebildeten Drehratensensor 100 zur Ermittlung der Gierrate des mit dem Nutzfahrzeug 10 verbundenen Sattelanhängers verbunden. Bei dieser Anordnung ermittelt die Steuereinheit 12 den Knickwinkel $\psi$ aus den ihr als Eingangsgrößen zugeführten Werten für die Drehrate des Sattelanhängers $\omega_{za}$ und die Drehrate $\omega_z$ des Nutzfahrzeugs 10 nach der Beziehung:

$$\Psi = \int (\omega_z - \omega_{za}) \, dt$$

Selbstverständlich kann in den Ausführungsbeispielen nach den Figuren 3 und 4 anstelle des Drehratensensors jeweils auch das Konzept zur Ermittlung der Drehrate gemäß dem Ausführungsbeispiel nach Figur 2, also die Verwendung eines Paares von in Längsrichtung versetzt angeordneten Beschleunigungssensoren, vorgesehen sein.

Bezugszeichenliste

| | |
|---|---|
| 1 , 1 | Bremsregelsystem |
| 2,4,6,8 | Räder |
| 10 | Nutzfahrzeug |
| 12 | Steuereinheit |
| 14 | Druckluftbehälter |
| 16 | Bremspedal |
| 17 | Betriebsbremsventil |
| 18 | Bremsleitungssystem |
| 20,22,24,26 | Bremsleitungen |
| 28,30,32,34 | Druckregelmodul |
| 36,38,40,42 | Leitung |
| 44,46,48,50, 52,54,56,58 | Signalleitung |
| 60,62,64,66 | Geschwindigkeitssensoren |
| 68 | Signalleitung |
| 70 | Lenkwinkelsensor |
| 72 | Lenkrad |
| 74 | Drehratensensor |
| 76 | Beschleunigungssensor |
| 78 | Wankwinkelsensor |
| 80 | Beschleunigungssensor |
| 81 | Signalleitung |
| 82 | Längsrichtung |
| 84 | Längsachse |
| 86 | Signalleitung |
| 88 | Knickwinkelsensor |
| 100 | Drehratensensor |
| $a_y$ | Querbeschleunigung im Schwerpunkt |
| $a_{y1}$, $a_{y2}$ | gemessene Querbeschleunigung |
| $\omega_z$ | Drehrate |
| $\omega_{za}$ | Drehrate des Anhängers |
| $\dot{\omega}_z$ | Drehbeschleunigung |
| $\psi$ | Knickwinkel |

**Patentansprüche**

1.  Bremsregelsystem (1, 1') zur Stabilisierung der Bewegung einer Zugfahrzeug-Anhänger-Kombination, bei dem eine Steuereinheit (12), die ausgangsseitig in Abhängigkeit von einer Anzahl von Eingangsgrößen für jedes Rad (2, 4, 6, 8) des Zugfahrzeugs (10) jeweils einen Stellwert für dessen Bremsdruck und/oder einen Stellwert für eine Ausgangsgröße des Antriebsmotors vorgibt, wobei die Steuereinheit (12) zur Erfassung der Eingangsgrößen eingangsseitig

    a) mit einem Lenkwinkelsensor (70) zur Erfassung eines vom Fahrer vorgegebenen Lenkwinkels verbunden ist und

    b) mit einem Sensorsystem zur Ermittlung der Drehrate ($\omega_z$) des Zugfahrzeugs (10), welches einen ersten Beschleunigungssensor (76) zur Erfassung der Querbeschleunigung des Zugfahrzeugs und einen zweiten Beschleunigungssensor (80) zur Erfassung der Querbeschleunigung des Zugfahrzeugs (10) umfasst, wobei der zweite Beschleunigungssensor (80) in Längsrichtung (82) des Zugfahrzeugs (10) gesehen versetzt zum ersten Beschleunigungssensor (76) angeordnet ist und die Steuereinheit (12) aus den ihr als Eingangsgrößen zugeführten Werten für die Beschleunigung ($a_{y1}$, $a_{y2}$) die Drehrate ($\omega_z$) des Zugfahrzeugs (10) ermittelt, sowie

    c) mit einem Drehratensensor (100) zur Ermittlung der Drehrate ($\omega_{za}$) des mit dem Zugfahrzeug (10) verbundenen Anhängers, wobei die Steuereinheit (12) den Knickwinkel ($\psi$) zwischen der Längsrichtung (82) des Zugfahrzeugs (10) und der Längsachse (84) des Anhängers aus den ihr als Eingangsgrößen zugeführten Werten für die Drehrate ($\omega_z$) des Zugfahrzeugs (10) und die Drehrate ($\omega_{za}$) des Anhängers ermittelt.

**2.** Bremsregelsystem nach Anspruch 1, bei dem der Drehratensensor (100) nach dem Coriolis-Prinzip arbeitet.

**3.** Bremsregelsystem nach Anspruch 1 oder 2, bei dem die Steuereinheit (12) eingangsseitig mit einem Wankwinkelsensor (78) zur Erfassung des Wankwinkels des Zugfahrzeugs (10) verbunden ist.

**4.** Bremsregelsystem nach Anspruch 1 oder 2, bei dem die Steuereinheit (12) eingangsseitig mit einem Wankgeschwindigkeitssensor (100) zur Erfassung der Winkelgeschwindigkeit zwischen einem Fahrzeugaufbau und einer Fahrzeugachse des Zugfahrzeugs (10) verbunden ist.

## Claims

**1.** Brake-regulating system for stabilising the movement of a tractor/trailer combination, wherein a controller unit (12), which predetermines, on the output side, a respective control value of the brake pressure of the tractor vehicle (10) and/or a control value of an output parameter of the driving engine of the vehicle for each wheel (2, 4, 6, 8) of said tractor vehicle as a function of a number of input parameters, wherein, for the detection of the input parameters on the input side, said controller unit (12)

(a) is connected to a steering-angle sensor (70) for the detection of a steering angle predetermined by the driver, and

(b) is connected to a sensor system for the detection of the rotational speed ($\omega_z$) of said tractor vehicle (10), which comprises a first acceleration sensor (76) for the detection of the transversal acceleration of said tractor vehicle and a second acceleration sensor (80) for the detection of the transversal acceleration of said tractor vehicle (10), with said second acceleration sensor (80) being disposed with offset relative to said first acceleration sensor (76) along the longitudinal extension (82) of said tractor vehicle and with said controller unit (12) determining the rotational speed ($\omega_z$) of said tractor vehicle (10) from the values of the acceleration ($a_{y1}$, $a_{y2}$) supplied as input parameters, as well as

(c) to a rotational speed sensor (100) for the detection of the rotational speed ($\omega_{za}$) of the trailer coupled to said tractor vehicle (10), with said controller unit (12) detecting the knifing angle ($\psi$) between the longitudinal extension (82) of said tractor vehicle (10) and the longitudinal axis (84) of said trailer from the values of the rotational speed ($\omega_z$) of said tractor vehicle (10) and the rotational speed ($\omega_{za}$) of said trailer (10) supplied as input parameters.

**2.** Brake-regulating system according to Claim 1, wherein said rotational speed sensor (100) operates on the Coriolis principle.

**3.** Brake-regulating system according to Claim 1 or 2, wherein said controller unit (12) is connected, on its input side, to a roll angle sensor (78) for the detection of the roll angle of said trailer vehicle (10).

**4.** Brake-regulating system according to Claim 3, wherein said controller unit (12) is connected, on its input side, to a roll rate sensor (100) for the detection of the angular speed between a body shell of the vehicle and a vehicle axis of said tractor vehicle (10).

## Revendications

**1.** Système de réglage de freinage destiné à stabiliser le mouvement d'une combinaison véhicule tracteur/remorque, dans lequel une unité de commande (12), qui prédétermine, du côté de sortie, une valeur respective de réglage de la pression de freinage du véhicule tracteur (10) et une valeur de réglage d'une donnée de sortie du moteur d'entraînement du véhicule pour chaque roue (2, 4, 6, 8) dudit véhicule tracteur en fonction d'un nombre de données d'entrée, dans lequel, pour la détection des données d'entrée du côté d'entrée, ladite unité de commande (12)

(a) est reliée à un détecteur de l'angle de renvoi de direction (70) afin de détecter un angle de renvoi de direction prédéterminé par le chauffeur, et

(b) est reliée à un système de détecteurs afin de détecter le régime tours par minute ($\omega_z$) dudit véhicule tracteur (10), qui comprend un premier détecteur d'accélération (76) à détecter l'accélération transversale dudit véhicule tracteur et un deuxième détecteur d'accélération (80) à détecter l'accélération dudit véhicule tracteur (10), audit deuxième détecteur d'accélération (80) étant disposé en déport relatif audit premier détecteur d'accélération (76) le long de la direction longitudinale (82) dudit véhicule tracteur et à ladite unité de commande (12) établissant le régime tours par minute ($\omega_z$) dudit véhicule tracteur (10) sur la base des valeurs de l'accélération ($a_{y1}$, $a_{y2}$) alimentées en tant que des données d'entrée, ainsi qu'à

(c) un détecteur de régime tours par minute (100) à détecter le régime tours par minute ($\omega_{za}$) de la remorque accouplé audit véhicule tracteur (10), à ladite unité de commande (12) détectant l'angle de désaxage ($\psi$) entre l'étendue longitudinale (82) dudit véhicule tracteur (10) et l'axe longitudinal (84) de ladite remorque sur la base des valeurs de régime tours par minute ($\omega_z$) dudit véhicule tracteur (10) et le régime tours par minute ($\omega_{za}$) de ladite remorque (10), qui sont alimentées en tant que des données d'entrée.

2. Système de réglage de freinage selon la revendication 1, dans lequel ledit détecteur de régime tours par minute fonctionne (100) selon le principe de Coriolis.

3. Système de réglage de freinage selon la revendication 1 or 2, dans lequel ladite unité de commande (12) est reliée, de son côté d'entrée, à un détecteur de l'angle de roulis (78) afin de détecter l'angle de roulis de ladite remorque (10).

4. Système de réglage de freinage selon la revendication 3, dans lequel ladite unité de commande (12) est reliée, de son côté d'entrée, à un détecteur de la vitesse de roulis (100) afin de détecteur la vitesse angulaire entre un montage extérieur du véhicule et un axe de véhicule dudit véhicule tracteur (10).

Fig. 1

Fig. 2

EP 1 347 906 B1

Fig. 3

EP 1 347 906 B1

Fig. 4

EP 1 347 906 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3919347 A1
- EP 1046571 A
- DE 4218034 A1